# EUROPEAN PATENT SPECIFICATION

(11) **EP 3 659 042 B1**
(45) Date of publication and mention of the grant of the patent: **06.10.2021**
(21) Application number: 17757553.7
(22) Date of filing: 25.08.2017
(51) Int. Cl.: G06F 16/174

(54) **APPARATUS AND METHOD FOR DEDUPLICATING DATA**
GERÄT UND VERFAHREN ZUR DE-DUPLIFIZIERUNG VON DATEN
APPAREIL ET METHODE POUR LA DEDUPLIFICATION DES DONNEES

(43) Date of publication of application: 03.06.2020
(73) Proprietor: Huawei Technologies Co., Ltd., Longgang District Shenzhen, Guangdong 518129 (CN)
(72) Inventor: TOAFF, Yair, 80992 Munich (DE); LI, Wei, 80992 Munich (DE); HIRSCH, Michael, 80992 Munich (DE); DAVID, Yehonatan, 80992 Munich (DE)
(74) Representative: Pfenning, Meinig & Partner mbB
(86) International application number: PCT/EP2017/071467
(87) International publication number: WO 2019/037877

(56) References cited:
- WO-A1-2011/082123
- US-A1- 2011 125 720
- US-A1- 2017 147 446

## Description

### TECHNICAL FIELD

The present invention relates to an apparatus and method for deduplicating data, in particular for storing received data blocks as deduplicated data blocks. Particularly, the present invention relates to backing up a database containing deduplication metadata.

### BACKGROUND

It has become common practice to process backups by removing data that has already been stored using a process known as "deduplication". Instead of storing duplicates, the process stores some form of references to where duplicate data is already stored. These references and other items stored "about" this data are commonly known as metadata.

The metadata for a stored data block is typically referred to as a deduplicated data block, and is a list of data segments of the stored data block. The data segments of the stored data block are sequences of consecutive bytes, and upon receiving the data block to be stored, the block is typically chunked into these data segments (segmentation). A typical data segment length varies from product to product, but may average about 4 kB. A block may contain thousands of such data segments.

The data segments are stored in containers, and a container may contain thousands of data segments. Each data segment is stored in the container in association with segment metadata, and the totality of all segment metadata of the data segments in a container is referred to as container metadata. The container metadata may store details about reference counts, which indicate for a unique data segment in how many data blocks the segment was found, storage details, and strong hashes of all of the data segments in the container.

In addition, a deduplication index is typically stored, in which data segments are referenced to stored deduplicated data blocks.

The metadata including the deduplicated data blocks and the deduplication index may be stored in a distributed database, which can be accessed from several servers of a cluster. The distributed database typically handles all the consistency and fault tolerance needed by the regular operation of an apparatus for deduplicating data (e.g. temporary down node, replacing node, failed disk etc.).

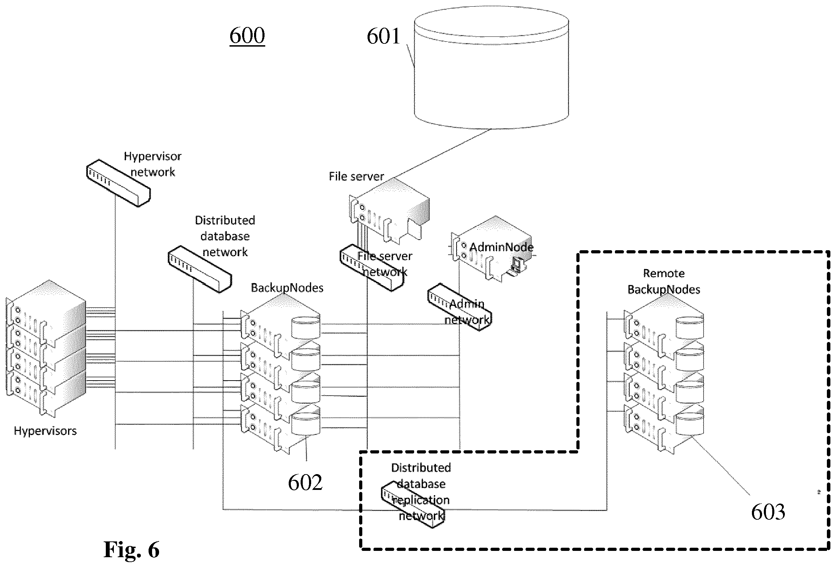

FIG. 6 shows a conventional apparatus 600 for deduplicating data. The apparatus 600 may include one or more backup nodes 602, each backup node 602 storing a database. The apparatus 600 may also include a repository storage 601, in which the containers are stored. The database holds metadata referencing to these containers. In order to provide some backup, the conventional apparatus 600 includes one or more remote backup nodes 603 for remote replication of the database. Therefore, however, additional hardware is required.

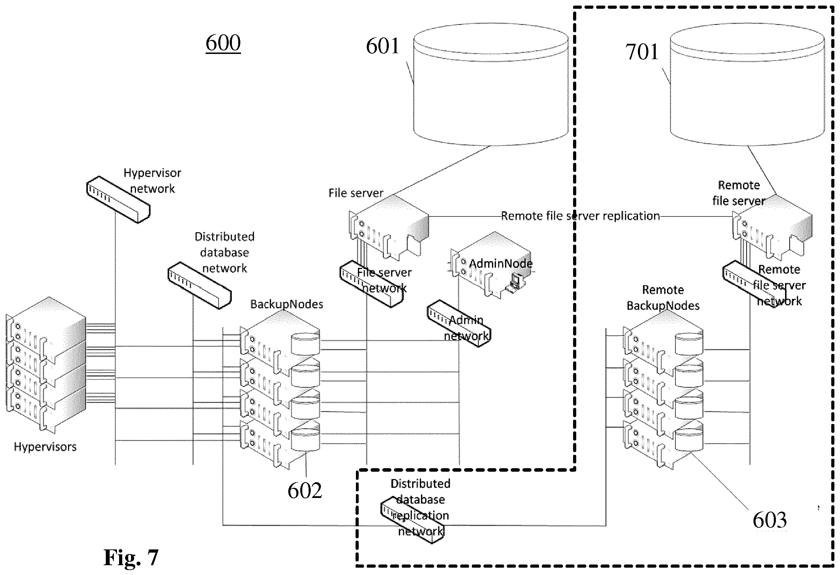

If, as shown in FIG. 7, also the repository 601 is to be backed up, the apparatus 600 requires a remote repository storage 701 for remote replication of all data, which even adds additional hardware.

However, a backup of the database and the repository 601 is necessary, since the database cannot handle disasters that destroy the storage of several servers in its cluster (more than the fault tolerance level of the database) simultaneously or permanently. However, the replication of the database and/or the repository to a remote database and/or a remote repository, respectively, introduces latency into every database operation, requires communication links with remote sites, and storage space at the remote sites for the remote database. For full backup, both database and repository would need to be replicated, and these replicas would even have to be synchronized. This requires a lot of computational resources and introduces further latency.

US2017147446 A1 discloses a computer-implemented method for taking snapshots in a deduplicated virtual file system that includes maintaining a deduplicated virtual file system that stores, at an original location within a non-virtual file system, at least one configuration file storing metadata for a target file and an extent map for the target file, the extent map defining how to construct the target file from deduplicated data segments in a deduplicated storage system, receiving a request to take a snapshot of the target file corresponding to the configuration file, copying the configuration file storing metadata for the target file and the extent map for the target file into a snapshot location within the non-virtual file system, and transmitting a file reference request to the deduplicated storage system to add a file reference within the deduplicated storage system.

WO2011082123 A1 discloses a spanning storage interface that facilitates the use of cloud storage services by storage clients. The spanning storage interface presents one or more data interfaces to storage clients at a network location, such as file, object, data backup, archival, and storage block based interfaces. The data interfaces allows storage clients to store and retrieve data using non-cloud based protocols. The spanning storage interface may perform data deduplication on data received from storage clients. A spanning storage interface facilitates the use of cloud storage services by storage clients. The spanning storage interface presents one or more data interfaces to storage clients at a network location, such as file, object, data backup, archival, and storage block based interfaces. The data interfaces allows storage clients to store and retrieve data using non-cloud based protocols. The spanning storage interface may perform data deduplication on data received from storage clients.

### SUMMARY

In view of the above-mentioned problems and disadvantages the present invention aims to improve the conventional apparatus. Thereby, the object of the present invention is to provide an apparatus and a method, which can recover the database from a disaster without using remote replication. In particular, the backing up of the database should be carried out efficiently without introducing latency, i.e. without sacrificing performance, and in a much more compact format than conventionally.

The object of the present invention is achieved by the solution provided in the enclosed independent claims. Advantageous implementations of the present invention are further defined in the dependent claims.

In particular, the present invention proposes a new design for backing up the database, which supports the two most relevant processes write and delete, particularly in an efficient manner.

A first aspect of the present invention provides an apparatus for storing received data blocks as deduplicated data blocks, the apparatus comprising a repository, storing one or more containers, each container storing one or more data segments and segment metadata for each data segment, and a database, storing a plurality of deduplicated data blocks, each deduplicated data block containing a plurality of references to the data segments of the received data block and to the containers storing these data segments, wherein the apparatus is configured to maintain, in the repository, a plurality of block backup files, each block backup file storing a copy of one or more deduplicated data blocks, and wherein the apparatus is configured to associate a deduplicated data block in the database with the block backup file in which a copy of the deduplicated data block is stored.

By adding to the conventional system the block backup files holding copies of the blocks' metadata, i.e. the deduplicated data blocks, allows rebuilding all contents of the database in case of a disaster. In particular, it is possible to rebuild each deduplicated data block in the database. The disaster recovery can be done by multiple nodes at the same time, each working on a different block backup file. Thus, the recovery can also be performed efficiently.

In an implementation form of the first aspect, the apparatus is configured to associate the deduplicated data block with the block backup file in which a copy of the deduplicated data block is stored by adding to the deduplicated data block a reference to the block backup file.

The reference to the block backup file can be implemented without taking much space and provides an efficient implementation of the desired association.

In a further implementation form of the first aspect, the database further includes a deduplication index.

That is, also the deduplication index can be recovered fully and efficiently in case of a disaster.

In a further implementation form of the first aspect, the segment metadata for a data segment includes at least a reference count indicating the number of deduplicated data blocks referring to that data segment.

In a further implementation form of the first aspect, the apparatus is configured to write a plurality of deduplicated data blocks sequentially into a block backup file, and add a time stamp to each written deduplicated data block.

By adding the time stamp to each written deduplicated data block, the apparatus can keep track of when a block was written, and the recovery in case of disaster can be carried out more efficiently.

In a further implementation form of the first aspect, the apparatus is configured to, for recovering a deduplicated data block from a block backup file, use only the deduplicated data block having the latest time stamp.

Since earlier entries will be ignored, the recovery is efficient and fast.

In a further implementation form of the first aspect, the apparatus is further configured to store, in association with each block backup file in the repository, a deleted block file for storing a reference to each deleted deduplicated data block associated with the block backup file.

The deleted block file enables a faster and more efficient recovery of the database in case of a disaster.

In a further implementation form of the first aspect, the apparatus is configured to for deleting a deduplicated data block, write the reference to the deduplicated data block to be deleted with a time stamp into the deleted block file associated with the block backup file associated with the deduplicated data block, delete the deduplicated data block from the database, modify the segment metadata or each data segment of the deduplicated data block in the repository.

In this way, a duplicated data block may be efficiently deleted in the apparatus of first aspect.

The time stamp is beneficial for a case in which the reference to the deduplicated data block is reused, and it is required to know that it is a new block.

In a further implementation form of the first aspect, the apparatus is further configured to, when a size of the deleted block file reaches a determined threshold value, for each reference to a deleted deduplicated data block in the deleted block file, remove all copies of deduplicated data blocks referenced in the deleted block file that have a time stamp earlier than the deleted time stamp from the block backup file, and reset the deleted block file.

This ensures that the deleted block file does not become too large, and does not impact on the space of the repository and the efficiency of the recovery.

In a further implementation form of the first aspect, the apparatus is configured to for rebuilding a database, process the most recent copy of each deduplicated data block in a block backup file, if the deduplicated data block is not referenced in the associated deleted block file with a time stamp more recent than the deduplicated data block, wherein the processing of the deduplicated data block includes incrementing a reference count of each data segment referenced by the deduplicated data block, and inserting the deduplicated data block into the database.

In this way, the database can be reconstructed completely and efficiently in case of a disaster.

In a further implementation form of the first aspect, the apparatus is further configured to store, in association with each block backup file in the repository, a reference file for storing a list of references to deduplicated data blocks and a position of each associated deduplicated data block in the block backup file.

In a further implementation form of the first aspect, the apparatus is further configured to, for accelerating the restore of a received data block, lookup in a reference file the position in the block backup file of the copy of the deduplicated data block associated with the received data block, and restore the received data block from the copy of the deduplicated data block and from the data segments in the containers referenced by the copy of the deduplicated data.

Advantageously, when the apparatus is otherwise unavailable to do so, a reference to the received data block is provided, and the apparatus is configured to use the reference to the received data block to lookup in the reference file the position in the block backup file.

In a further implementation form of the first aspect, the apparatus is further configured to, for allowing instant restore for all received data blocks in the apparatus before the database is rebuilt, lookup in all the reference files the positions in the block backup files of the copies of the deduplicated data blocks associated with all the received data blocks.

In particular, for restoring one or more data blocks during or before rebuilding a database, the apparatus is configured to read the relevant reference files into a memory and build a map indicating the position of each deduplicated data block in the block backup files associated with the reference files. Then, the apparatus is configured to restore the data blocks from said deduplicated data blocks in the block backup files and the data segments in the containers referenced by said deduplicated data blocks. Advantageously, when all the relevant reference files are read into the map in the memory, the apparatus has random access to all relevant deduplicated data blocks. The deduplicated data blocks needed for reconstructing the blocks can thus be read more efficiently from the container files in the repository. After a disaster, restores can therefore almost start immediately.

In a further implementation form of the first aspect, the apparatus is further configured to back up the repository in a remote repository.

This enables a complete remote backup of the apparatus. Therefore, only the repository needs to be replicated. The backup includes the actual data (containers) and the files that allow restoring the database. The replication can be done by any storage replication software on the hardware available to the user.

A second aspect of the present invention provides a method for storing received data blocks as deduplicated data blocks, the method comprising storing, in a repository, one or more containers, each container storing one or more data segments and segment metadata for each data segment, storing, in a database, a plurality of deduplicated data blocks, each deduplicated data block containing a plurality of references to the data segments of a received data block and to containers storing these data segments, maintaining, in the repository, a plurality of block backup files, each block backup file storing a copy of one or more deduplicated data blocks, and associating a deduplicated data block in the database with the block backup file in which a copy of the deduplicated data block is stored.

In an implementation form of the second aspect, the method comprises associating the deduplicated data block with the block backup file in which a copy of the deduplicated data block is stored by adding to the deduplicated data block a reference to the block backup file.

In a further implementation form of the second aspect, the database further includes a deduplication index.

In a further implementation form of the second aspect, the segment metadata for a data segment includes at least a reference count indicating the number of deduplicated data blocks referring to that data segment.

In a further implementation form of the second aspect, the method comprises writing a plurality of deduplicated data blocks sequentially into a block backup file, and adding a time stamp to each written deduplicated data block.

In a further implementation form of the second aspect, the method comprises, for recovering a deduplicated data block from a block backup file, using only the deduplicated data block having the latest time stamp.

In a further implementation form of the second aspect, the method further comprises storing, in association with each block backup file in the repository, a deleted block file for storing a reference to each deleted deduplicated data block associated with the block backup file.

In a further implementation form of the second aspect, the method comprises, for deleting a deduplicated data block, writing the reference to the deduplicated data block to be deleted with a time stamp into the deleted block file associated with the block backup file associated with the deduplicated data block, deleting the deduplicated data block from the database, modifying the segment metadata or each data segment of the deduplicated data block in the repository.

In a further implementation form of the second aspect, the method further comprises, when a size of the deleted block file reaches a determined threshold value, for each reference to a deleted deduplicated data block in the deleted block file, removing all copies of deduplicated data blocks referenced in the deleted block file that have a time stamp earlier than the deleted time stamp from the block backup file, and reset the deleted block file.

In a further implementation form of the second aspect, the method further comprises, for rebuilding a database, processing the most recent copy of each deduplicated data block in a block backup file, if the deduplicated data block is not referenced in the associated deleted block file with a time stamp more recent than the deduplicated data block, wherein the processing of the deduplicated data block includes incrementing a reference count of each data segment referenced by the deduplicated data block, and inserting the deduplicated data block into the database.

In a further implementation form of the second aspect, the method comprises storing, in association with each block backup file in the repository, a reference file for storing a list of references to deduplicated data blocks and a position of each associated deduplicated data block in the block backup file.

In a further implementation form of the second aspect, the method further comprises, for accelerating the restore of a received data block, looking up in a reference file the position in the block backup file of the copy of the deduplicated data block associated with the received data block, and restoring the received data block from the copy of the deduplicated data block and from the data segments in the containers referenced by the copy of the deduplicated data block.

In a further implementation form of the second aspect, the method further comprises, for allowing instant restore for all received data blocks, looking up in all the reference files the positions in the block backup files of the copies of the deduplicated data blocks associated with all the received data blocks.

In a further implementation form of the second aspect, the method further comprises backing up the repository in a remote repository.

With the method of the second aspect and its implementation forms, the same advantages and effects of the apparatus of the first aspect and its implementation forms, respectively, may be achieved.

A third aspect of the present invention provides a computer program product comprising a program code for controlling an apparatus according to the first aspect or any implementation form thereof or performing, when running on a computer, the method according to the second aspect or any implementation form thereof.

With the computer program product of the third aspect, all advantages and effects of the apparatus of the first aspect and the method of the second aspect can be achieved.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above-described aspects and implementation forms of the present invention will be explained in the following description of specific embodiments in relation to the enclosed drawings, in which
- FIG. 1: shows an apparatus according to an embodiment of the present invention.
- FIG. 2: shows a method according to an embodiment of the present invention.
- FIG. 3: shows a repository of an apparatus according to the present invention.
- FIG. 4: shows a system including an apparatus according to an embodiment of the present invention.
- FIG. 5: shows a system including an apparatus according to an embodiment of the present invention.
- FIG. 6: shows a conventional system and apparatus.
- FIG. 7: shows a conventional system and apparatus.

### DETAILED DESCRIPTION OF EMBODIMENTS

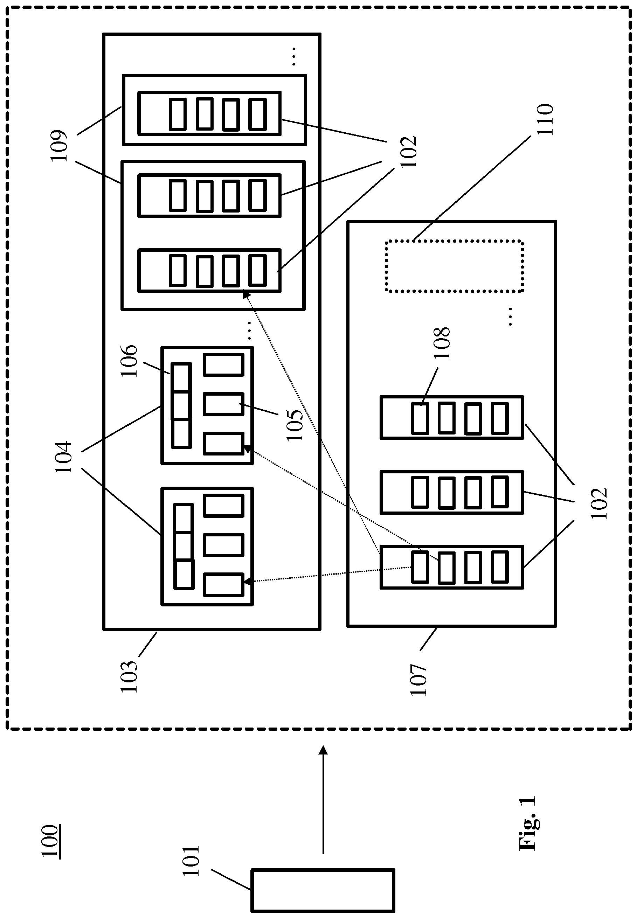

FIG. 1 shows an apparatus 100 according to an embodiment of the present invention. The apparatus 100 is configured to store a received data block 101 as a deduplicated data block 102.

To this end, the apparatus 100 comprises a repository 103 and a database 107. The database 107 may be maintained in a backup node of a network system. The repository may be a standard repository storage of a network system.

The database 107 is configured to store a plurality of deduplicated data blocks 102. Each deduplicated data block 102 is metadata of a received and stored data block 101. Each deduplicated data block 102 contains a plurality of references to the data segments 105 of a received data block 101 corresponding to the deduplicated data block 102, and to the containers 104 storing these data segments 105. In FIG. 1 it is indicated by the dotted arrows that for the first deduplicated data block 102 in the database 107 the first two references 108 reference data segments 105 in two different containers 104.

The containers 104 are stored in the repository 103. Each container 104 stores one or more data segments 105, wherein each data segment is preferably a unique data segment within the apparatus 100, i.e. a specific data segment 105 is stored only in one container 104. Further, the container 104 stores segment metadata 106 for each data segment 105, wherein the plurality of the segment metadata 106 for the data segments 105 in one container 104 is referred to as the container metadata.

In addition to the containers 104, the apparatus 100 is further configured to maintain in the repository 103 a plurality of block backup files 109. Each block backup file 109 is configured to store a copy of one or more deduplicated data blocks 102.

Further, the apparatus 100 is configured to associate deduplicated data block 102 in the database 107 with the block backup file 109 in which a copy of the deduplicated data block 102 is stored. This is indicated by the dotted arrow pointing from the first deduplicated data block 102 in the database 107 to the first deduplicated data block 102 in the first block backup file 109.

This association between the deduplicated data block 102 in the database 107 and the block backup file 109 may be carried out by storing in the deduplicated data block 102 in the database 107 a reference to the block backup file 109. Notably, the database 107 may further (optionally) include a deduplication index 110.

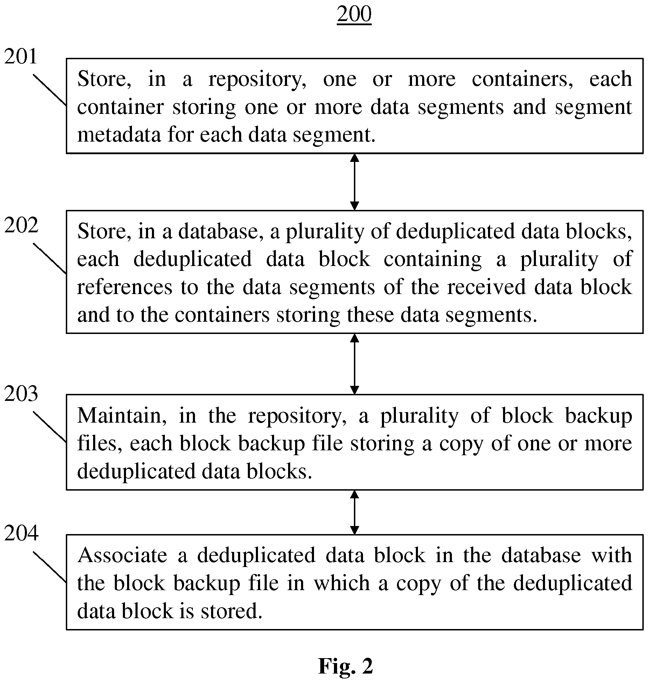

FIG. 2 shows a method 200 according to an embodiment of the present invention. The method 200 includes method steps 201 - 204, which however do not need to be carried out in any particular order. The method 200 corresponds to the apparatus 100, in particular the method steps 201 - 204 correspond to the actions of the apparatus 100 shown in FIG. 1. Thus, the apparatus 100 in FIG. 1 is configured to carry out the method 200 shown in FIG. 2.

In particular, in a step 201, one or more containers 104 are stored in a repository 103, wherein each container 104 stores one or more data segments 105 and segment metadata 106 for each data segment 105. In a step 202, a plurality of deduplicated data blocks 102 are stored in a database 107, wherein each deduplicated data block 102 contains a plurality of references 108 to the data segments 105 of the received data block 101 and to the containers 104 storing these data segments 105.

In a step 203, a plurality of block backup files 109 are maintained in the repository 103, wherein each block backup file 109 stores a copy of one or more deduplicated data blocks 102.

In a step 204, a deduplicated data block 102 in the database 107 is associated with the block backup file 109, in which a copy of the deduplicated data block 102 is stored.

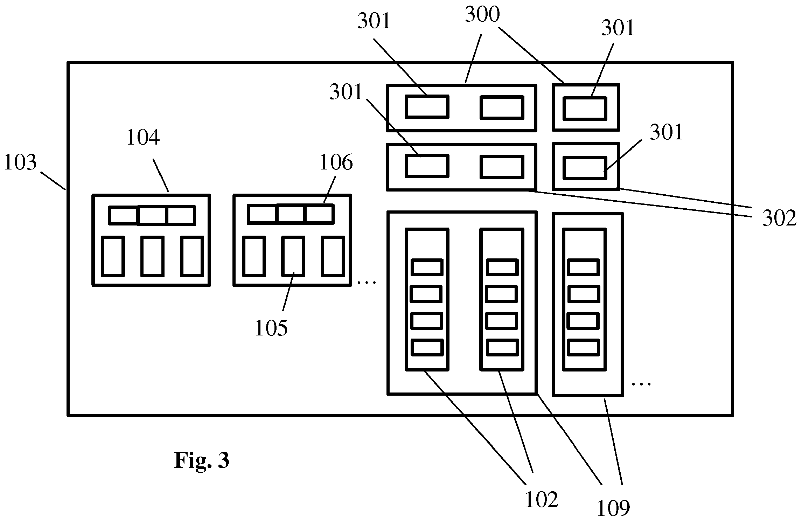

FIG. 3 shows in more detail a repository 103, and its contents, of an apparatus 100 according to an embodiment of the present invention as shown in FIG. 1. The repository 103 includes a plurality of containers 104, each container 104 containing data segments 105 and segment metadata 106. In addition, in order to enable the recovery of the database 107 in case of a disaster, the repository 103 also stores a plurality of block backup files 109. In FIG. 3 two block backup files 109 are shown. Each block backup file 109 has one or more deduplicated data blocks 102 inside. In FIG. 3, the first block backup file 109 stores two deduplicated data blocks 102, wherein a second block backup file 109 stores only one deduplicated data block 102.

Furthermore, in association with each block backup file 109 is stored a deleted block file 300. Here, two deleted block files 300 are shown, wherein one is associated with one of each of the block backup files 109. Each deleted block file 300 stores preferably a reference 301 to each deleted deduplicated data block 102, which is associated with the block backup file 109. Such a reference 301 may be a block identifier of a deleted deduplicated data block 102. In FIG. 3, it is shown that the deleted block file 300 associated with the block backup file 109 including the two deduplicated data blocks 102 includes two references 301. This means, that both referenced deduplicated data blocks 102 are deleted. The other deleted block file 300 stores the reference 301 to the deduplicated data block 102 in the block backup file 109 holding only a single deduplicated data block 102. Accordingly, also this referenced deduplicated data block 102 is currently deleted.

Furthermore, in association with each block backup file 109 is stored a reference file 302. Here, two reference files 302 are shown, wherein one is associated with one of each of the block backup files 109. Each reference file 302 stores preferably a reference 301 to each deduplicated data block 102, which is associated with the block backup file 109. In FIG. 3, it is shown that the reference block file 302 associated with the block backup file 109 including the two deduplicated data blocks 102 includes two references 301. The other reference file 302 stores the reference 301 to the deduplicated data block 102 in the block backup file 109 holding only a single deduplicated data block 102.

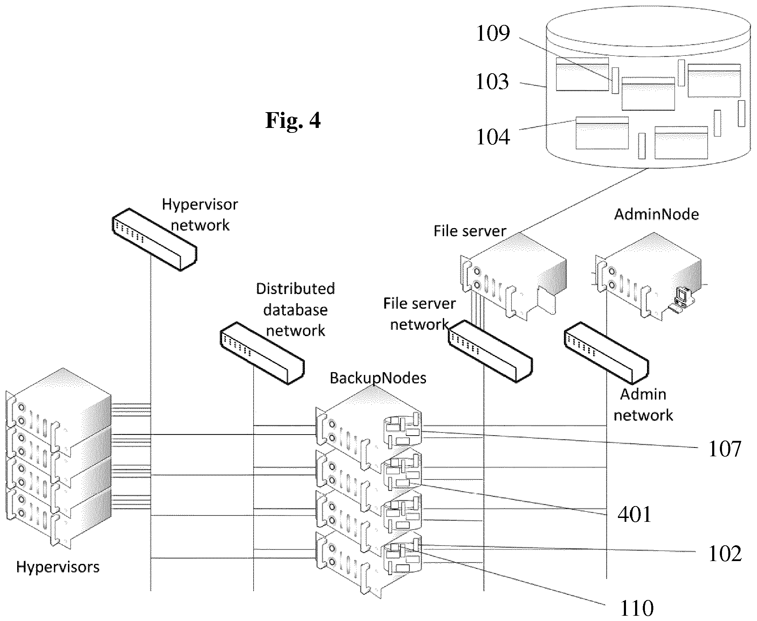

FIG. 4 shows the apparatus 100 according to an embodiment of the present invention implemented into a system, which includes a hypervisor network, a distributed database network, a file server network, and an admin network. In particular, between the distributed database network and the file server network, there is located at least one backup node, which stores the database 107. In this database 107, at least a plurality of deduplicated data blocks 102 are stored. Additionally, the database 107 may also include a deduplication index 110 and/or a reference count 401 for each data segment 105, which is referenced by the deduplicated data block 102 in the database 107.

The repository 103 of the apparatus 100 is connected to a file server in the file server network. The repository 103 stores the plurality of containers 104, wherein each container 104 includes data segments 105 and segment metadata 106, and further includes the plurality of block backup files 109.

FIG. 4 further shows a hypervisor network including at least one hypervisor that is connected to the distributed database network. FIG. 4 also shows an admin network connected to the file server network, wherein the admin network includes at least one admin node.

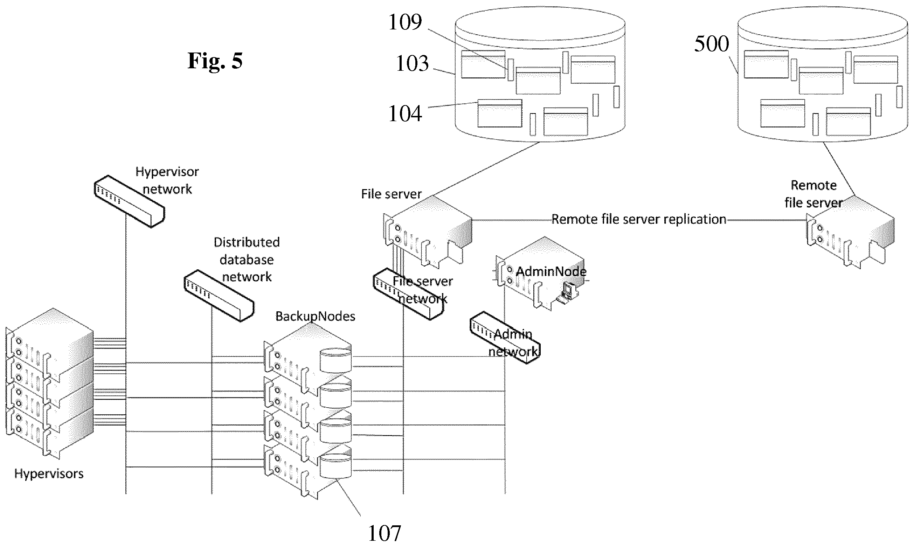

FIG. 5 shows an extension of the system of FIG. 4 including the apparatus 100 according to an embodiment of the present invention. In particular, in the system of FIG. 5 the apparatus 100 is further configured to back up the repository 103 in a remote repository 500. The remote repository 500 is connected to a remote file server, which remote file server is again connected - for remote file server replication - to the file server of the file server network. This file server is again connected to the repository 103. In the remote repository 500, the containers 104 and the block backup files 109 are replicated.

If a block is to be deleted from the apparatus 100 shown in one of the FIGs 1, 4 and 5, the reference 301 to the deleted deduplicated data block 102 is written into the deleted block file 300 that is shown in FIG. 3. Then, the deduplicated data block 102 is deleted from the database 107. Each deduplicated data block 102 may have an additional field containing the name of the block backup file 109 that stores its backup in the repository 103. In this case, when the deduplicated data block 102 is deleted, this indicates the backup, from which is must be removed.

The segment metadata 106 for each data segment 105 of the deduplicated data block 102, which is deleted, is modified in the repository. This means that, for instance, a reference count is decreased by one, if a deduplicated data block 102, which includes a particular data segment 105 associated with a particular reference count, is deleted.

When, during the deletion process, the entry into the deleted block file 300 is created, a time stamp may also be created, preferably just after deleting the deduplicated data block 102 from the database 107, but before modifying the segment metadata 106, e.g. before decreasing the reference count 401. The time stamp allows ignoring blocks that were written several times, due to errors in later stages, and thus makes the apparatus 100 and especially the deletion of blocks more efficient.

When the deleted block file 300 becomes large enough, the block backup file 109 is defragmented and all deduplicated data blocks 102 for deleted blocks are removed. In other words, all copies of deduplicated data blocks 102 that are referenced by a reference 301 in the associated deleted block file 300 are removed from the block backup file 109, and the deleted block file 300 is reset.

In case of a disaster, the contents of the database 107 may be rebuilt. Thereby, a deduplicated data block 102 that is in a block backup file 109 and not in its associated deleted block file 300 is processed. In particular, the most recent copy of each deduplicated data block 102 in a block backup file 109 is processed, if the deduplicated data block 102 is not referenced in the associated deleted block file 300 with a time stamp more recent than the deduplicated data block 102, e.g. if its reference 301 is not included in the associated deleted block file 300 with a time stamp more recent than the deduplicated data block (102). The processing of the deduplicated data block 102 includes preferably an incrementing of a reference count 401 of each data segment 105 referenced by the deduplicated data block 102, and inserting the deduplicated data block 102 into the database 107.

The deduplication index 110 is preferably rebuilt by updating it with the same representation as would have been done during initial backup. Because preferably reference counts 401 of the containers 104 and the deduplication index 110 are rebuilt and then stored separately, the backup is significantly smaller than the space needed for remote replication of the database in a conventional system and apparatus. Notably, the disaster recovery can be done by multiple nodes at the same time, each working on a different backup file, therefore making the whole process faster.

Nevertheless, database recovery will take a certain amount of time, so that another mechanism is provided to service restore requests during this time period. To this end, another file referred to as reference file 302 is associated with each block backup file 109 in the repository. The reference file 302 is for storing a list of references 301 to deduplicated data blocks 102, e.g. block identifiers, and a position of each associated deduplicated data block 102 in the block backup file 109. When a restore is requested after a disaster (before the database 107 is fully recovered), all the relevant reference files 302 are read into a map in a memory. The apparatus 100 now has random access to all relevant deduplicated data blocks 102. The deduplicated data blocks 102 needed for reconstructing blocks may be read directly from the containers 104 in the repository 103. This has also the beneficial effect that after a disaster, restores can start almost immediately. Restores in this mode are independent of the database recovery process. The reference file 302 is rewritten as part of the defragmentation of its block backup file 109.

As shown in FIG. 5, the complete system can be backed up with the remote repository 500. The backup includes the containers 104 and all files that allow restoring of the database 107. Benefit of the apparatus 100 of the present invention is here that each access to the block backup file 109 on write and/or delete replaces seven calls for the database replication that is done conventionally (one for the block, two for index entries and four for container reference counts).

In summary, the present invention suggests a way to back up metadata saved in a database 107 for an apparatus 100 for deduplicating data. Thereby, regular repository storage is used, making it possible to use conventional hardware. The block backup files 109 including the backups of the deduplicated data blocks 102 are saved internally in the apparatus 100 in a different (and cheaper) part. This saves latency (i.e. preserves performance) and space, because the format is more compact. The backing up of the deduplicated data blocks 102 and the block backup files 109 can be used to recover the database 107 after disaster, use the repository 103 after the disaster in read-only-mode (until restored), and replicate the entire system by external replication of only the repository storage 103 to a remote repository 500.

The present invention enhances the conventional apparatus and method for deduplicating data and provides a cheap integral way to recover the database 107 after a catastrophic disaster that destroys the database's consistency. The backup mechanism presented in this invention also requires less hardware than conventionally, and works faster than the conventional apparatus and method. Data can be restored from the apparatus at approximately the same speed as regular operations, while the database recovery is in progress.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. Apparatus (100) for storing received data blocks (101) as deduplicated data blocks (102), the apparatus (100) comprising
a repository (103), storing one or more containers (104), each container (104) storing one or more data segments (105) and segment metadata (106) for each data segment (105), and
a database (107), storing a plurality of deduplicated data blocks (102), each deduplicated data block (102) containing a plurality of references (108) to the data segments (105) of the received data block (101) and to the containers (104) storing these data segments (105),
wherein the apparatus (100) is configured to maintain, in the repository (103), a plurality of block backup files (109), each block backup file (109) storing a copy of one or more deduplicated data blocks (102), and
wherein the apparatus (100) is configured to associate a deduplicated data block (102) in the database (107) with the block backup file (109) in which a copy of the deduplicated data block (102) is stored.

2. Apparatus (100) according to claim 1, wherein
the apparatus (100) is configured to associate the deduplicated data block (102) with the block backup file (109) in which a copy of the deduplicated data block (102) is stored by adding to the deduplicated data block (102) a reference to the block backup file (109).

3. Apparatus (100) according to claim 1 or 2, wherein
the database (107) further includes a deduplication index (110).

4. Apparatus (100) according to one of the claims 1 to 3, wherein
the segment metadata (106) for a data segment (105) includes at least a reference count (401) indicating the number of deduplicated data blocks (102) referring to that data segment (105).

5. Apparatus (100) according to one of the claims 1 to 4, configured to
write a plurality of deduplicated data blocks (102) sequentially into a block backup file (109), and add a time stamp to each written deduplicated data block (102).

6. Apparatus (100) according to one of the claims 1 to 5, configured to, for recovering a deduplicated data block (102) from a block backup file (109),
use only the deduplicated data block (102) having the latest time stamp.

7. Apparatus (100) according to one of the claims 1 to 6, further configured to
store, in association with each block backup file (109) in the repository (103), a deleted block file (300) for storing a reference (301) to each deleted deduplicated data block (102) associated with the block backup file (109).

8. Apparatus (100) according to claim 7, configured to, for deleting a deduplicated data block (102),
write the reference (301) to the deduplicated data block (102) to be deleted with a time stamp into the deleted block file (300) associated with the block backup file (109) associated with the deduplicated data block (102),
delete the deduplicated data block (102) from the database (107),
modify the segment metadata (106) for each data segment (105) of the deduplicated data block (102) in the repository (103).

9. Apparatus (100) according to one of the claims 7 to 8, further configured to, when a size of the deleted block file (300) reaches a determined threshold value,
for each reference (301) to a deleted deduplicated data block (102) in the deleted block file (300), remove all copies of deduplicated data blocks (102) referenced in the deleted block file (300) that have a time stamp earlier than the deleted time stamp from the block backup file (109), and
reset the deleted block file (300).

10. Apparatus (100) according to one of the claims 7 to 9, configured to, for rebuilding a database (107),
process the most recent copy of each deduplicated data block (102) in a block backup file (109), if the deduplicated data block (102) is not referenced in the associated deleted block file (300) with a time stamp more recent than the deduplicated data block (102), wherein the processing of the deduplicated data block (102) includes incrementing a reference count (401) of each data segment (105) referenced by the deduplicated data block (102), and inserting the deduplicated data block (102) into the database (107).

11. Apparatus (100) according to claim 10, further configured to
store, in association with each block backup file (109) in the repository (103), a reference file (302) for storing a list of references (301) and a position of each associated deduplicated data block (102) in the block backup file (109).

12. Apparatus (100) according to claim 11, further configured to, for accelerating the restore of a received data block (101),
lookup in a reference file (302) the position in the block backup file (109) of the copy of the deduplicated data block (102) associated with the received data block (101), and
restore the received data block (101) from the copy of the deduplicated data block (102) and from the data segments (105) in the containers (104) referenced by the copy of the deduplicated data block (102).

13. Apparatus (100) according to claim 11 or 12, further configured to, for allowing instant restore for all received data blocks (101) in the apparatus (100) before the database (107) is rebuilt,
lookup in all the reference files (302) the positions in the block backup files (109) of the copies of the deduplicated data blocks (102) associated with all the received data blocks (101).

14. Apparatus (100) according to one of the claims 1 to 13, further configured to backup the repository (103) in a remote repository (500).

15. Method (200) for storing received data blocks (101) as deduplicated data blocks (102), the method comprising
storing (201), in a repository (103), one or more containers (104), each container (104) storing one or more data segments (105) and segment metadata (106) for each data segment (105),
storing (202), in a database (107), a plurality of deduplicated data blocks (102), each deduplicated data block (102) containing a plurality of references (108) to the data segments (105) of the received data block (101) and to the containers (104) storing these data segments (105),
maintaining (203), in the repository (103), a plurality of block backup files (109), each block backup file (109) storing a copy of one or more deduplicated data blocks (102), and
associating a deduplicated data block (102) in the database (107) with the block backup file (109) in which a copy of the deduplicated data block (102) is stored.

16. Computer program product comprising a program code for controlling an
apparatus according to one of the claims 1 to 14 or for performing, when running on a computer, the method according to claim 15.

## Patentansprüche

1. Vorrichtung (100) zum Speichern empfangener Datenblöcke (101) als deduplizierte Datenblöcke (102), wobei die Vorrichtung (100) Folgendes umfasst:
ein Repository (103), das ein oder mehrere Container (104) speichert, wobei jeder Container (104) ein oder mehrere Datensegmente (105) und für jedes Datensegment (105) Segmentmetadaten (106) speichert, und
eine Datenbank (107), die mehrere deduplizierte Datenblöcke (102) speichert, wobei jeder deduplizierte Datenblock (102) mehrere Verweise (108) auf die Datensegmente (105) des empfangenen Datenblocks (101) und auf die Container (104), die diese Datensegmente (105) speichern, enthält,
wobei die Vorrichtung (100) dazu konfiguriert ist, in dem Repository (103) mehrere Blocksicherungsdateien (109) zu verwalten, wobei jede Blocksicherungsdatei (109) eine Kopie eines oder mehrerer deduplizierter Datenblöcke (102) speichert, und
wobei die Vorrichtung (100) dazu konfiguriert ist, einen deduplizierten Datenblock (102) in der Datenbank (107) mit der Blocksicherungsdatei (109) zu verknüpfen, in der eine Kopie des deduplizierten Datenblocks (102) gespeichert ist.

2. Vorrichtung (100) nach Anspruch 1, wobei
die Vorrichtung (100) dazu konfiguriert ist, den deduplizierten Datenblock (102) mit der Blocksicherungsdatei (109) zu verknüpfen, in der eine Kopie des deduplizierten Datenblocks (102) gespeichert ist, indem dem deduplizierten Datenblock (102) ein Verweis auf die Blocksicherungsdatei (109) hinzugefügt wird.

3. Vorrichtung (100) nach Anspruch 1 oder 2, wobei
die Datenbank (107) ferner einen Deduplizierungsindex (110) beinhaltet.

4. Vorrichtung (100) nach einem der Ansprüche 1 bis 3, wobei
die Segmentmetadaten (106) für ein Datensegment (105) mindestens einen Verweiszähler (401) beinhalten, der die Anzahl deduplizierter Datenblöcke (102) angibt, die auf dieses Datensegment (105) verweisen.

5. Vorrichtung (100) nach einem der Ansprüche 1 bis 4, die dazu konfiguriert ist,
mehrere deduplizierte Datenblöcke (102) sequentiell in eine Blocksicherungsdatei (109) zu schreiben und jedem geschriebenen deduplizierten Datenblock (102) einen Zeitstempel hinzuzufügen.

6. Vorrichtung (100) nach einem der Ansprüche 1 bis 5, die zum Wiederherstellen eines deduplizierten Datenblocks (102) aus einer Blocksicherungsdatei (109) dazu konfiguriert ist,
nur den deduplizierten Datenblock (102),der den neuesten Zeitstempel aufweist, zu verwenden.

7. Vorrichtung (100) nach einem der Ansprüche 1 bis 6, die ferner dazu konfiguriert ist,
verknüpft mit jeder Blocksicherungsdatei (109) in dem Repository (103) eine Datei gelöschter Blöcke (300) zu speichern, um einen Verweis (301) auf jeden gelöschten deduplizierten Datenblock (102), der mit der Blocksicherungsdatei (109) verknüpft ist, zu speichern.

8. Vorrichtung (100) nach Anspruch 7, die zum Löschen eines deduplizierten Datenblocks (102) dazu konfiguriert ist,
den Verweis (301) auf den zu löschenden deduplizierten Datenblock (102) mit einem Zeitstempel in die Datei gelöschter Blöcke (300) zu schreiben, die mit der mit dem deduplizierten Datenblock (102) verknüpften Blocksicherungsdatei (109) verknüpft ist,
den deduplizierten Datenblock (102) aus der Datenbank (107) zu löschen,
die Segmentmetadaten (106) für jedes Datensegment (105) des deduplizierten Datenblocks (102) im Repository (103) abzuändern.

9. Vorrichtung (100) nach einem der Ansprüche 7 bis 8, die ferner dazu konfiguriert ist, wenn eine Größe der Datei gelöschter Blöcke (300) einen festgelegten Schwellenwert erreicht,
für jeden Verweis (301) auf einen gelöschten deduplizierten Datenblock (102) in der Datei gelöschter Blöcke (300) alle Kopien von deduplizierten Datenblöcken (102) zu entfernen, auf die in der Datei gelöschter Blöcke (300) verwiesen wird und die einen früheren Zeitstempel als den gelöschten Zeitstempel aus der Blocksicherungsdatei (109) aufweisen, und
die Datei gelöschter Blöcke (300) zurückzusetzen.

10. Vorrichtung (100) nach einem der Ansprüche 7 bis 9, die zum Wiederherstellen einer Datenbank (107) dazu konfiguriert ist,
die aktuellste Kopie jedes deduplizierten Datenblocks (102) in einer Blocksicherungsdatei (109) zu verarbeiten, falls auf den deduplizierten Datenblock (102) in der verknüpften Datei gelöschter Blöcke (300) nicht mit einem Zeitstempel verwiesen wird, der aktueller als der deduplizierte Datenblock (102) ist, wobei das Verarbeiten des deduplizierten Datenblocks (102) ein Inkrementieren eines Verweiszählers (401) jedes Datensegments (105), auf das durch den deduplizierten Datenblock (102) verwiesen wird, und ein Einfügen des deduplizierten Datenblocks (102) in die Datenbank (107) beinhaltet.

11. Vorrichtung (100) nach Anspruch 10, die ferner dazu konfiguriert ist,
verknüpft mit jeder Blocksicherungsdatei (109) im Repository (103) eine Verweisdatei (302) zu speichern, um eine Liste von Verweisen (301) und eine Position jedes verknüpften deduplizierten Datenblocks (102) in der Blocksicherungsdatei (109) zu speichern.

12. Vorrichtung (100) nach Anspruch 11, die zum Beschleunigen der Wiederherstellung eines empfangenen Datenblocks (101) ferner dazu konfiguriert ist,
in einer Verweisdatei (302) die Position in der Blocksicherungsdatei (109) der Kopie des deduplizierten Datenblocks (102), die mit dem empfangenen Datenblock (101) verknüpft ist, aufzusuchen; und
den empfangenen Datenblock (101) aus der Kopie des deduplizierten Datenblocks (102) und aus den Datensegmenten (105) in den Containern (104), auf die durch die Kopie des deduplizierten Datenblocks (102) verwiesen wird, wiederherzustellen.

13. Vorrichtung (100) nach Anspruch 11 oder 12, die ferner zum Ermöglichen einer sofortigen Wiederherstellung für alle empfangenen Datenblöcke (101) in der Vorrichtung (100) vor der Wiederherstellung der Datenbank (107) dazu konfiguriert ist,
in den sämtlichen Verweisdateien (302) die Positionen in den Blocksicherungsdateien (109) der Kopien der deduplizierten Datenblöcke (102), die mit den sämtlichen empfangenen Datenblöcken (101) verknüpft sind, aufzusuchen.

14. Vorrichtung (100) nach einem der Ansprüche 1 bis 13, die ferner dazu konfiguriert ist, das Repository (103) in einem entfernten Repository (500) zu sichern.

15. Verfahren (200) zum Speichern empfangener Datenblöcke (101) als deduplizierte Datenblöcke (102), wobei das Verfahren Folgendes umfasst:
Speichern (201) von einem oder mehreren Containern (104) in einem Repository (103), wobei jeder Container (104) ein oder mehrere Datensegmente (105) und für jedes Datensegment (105) Segmentmetadaten (106) speichert,
Speichern (202) von mehreren deduplizierten Datenblöcken (102) in einer Datenbank (107), wobei jeder deduplizierte Datenblock (102) mehrere Verweise (108) auf die Datensegmente (105) des empfangenen Datenblocks (101) und auf die Container (104), die diese Datensegmente (105) speichern, enthält,
Verwalten (203) mehrerer Blocksicherungsdateien (109) in dem Repository (103), wobei jede Blocksicherungsdatei (109) eine Kopie eines oder mehrerer deduplizierter Datenblöcke (102) speichert, und
Verknüpften eines deduplizierten Datenblocks (102) in der Datenbank (107) mit der Blocksicherungsdatei (109), in der eine Kopie des deduplizierten Datenblocks (102) gespeichert ist.

16. Computerprogrammprodukt, das einen Programmcode zum Steuern einer Vorrichtung nach einem der Ansprüche 1 bis 14 oder, wenn er auf einem Computer ausgeführt wird, zum Durchführen des Verfahrens nach Anspruch 15 umfasst.

## Revendications

1. Appareil (100) destiné à stocker des blocs de données reçus (101) sous forme de blocs de données dédupliqués (102), l'appareil (100) comprenant
un référentiel (103), stockant un ou plusieurs conteneurs (104), chaque conteneur (104) stockant un ou plusieurs segments de données (105) et des métadonnées de segment (106) pour chaque segment de données (105), et
une base de données (107), stockant une pluralité de blocs de données dédupliqués (102), chaque bloc de données dédupliqué (102) contenant une pluralité de références (108) aux segments de données (105) du bloc de données reçu (101) et aux conteneurs (104) stockant ces segments de données (105),
dans lequel l'appareil (100) est configuré pour maintenir, dans le référentiel (103), une pluralité de fichiers de sauvegarde de bloc (109), chaque fichier de sauvegarde de bloc (109) stockant une copie d'un ou plusieurs blocs de données dédupliqués (102), et
dans lequel l'appareil (100) est configuré pour associer un bloc de données dédupliqué (102) dans la base de données (107) au fichier de sauvegarde de bloc (109) dans lequel une copie du bloc de données dédupliqué (102) est stockée.

2. Appareil (100) selon la revendication 1, dans lequel
l'appareil (100) est configuré pour associer le bloc de données dédupliqué (102) au fichier de sauvegarde de bloc (109) dans lequel une copie du bloc de données dédupliqué (102) est stockée en ajoutant au bloc de données dédupliqué (102) une référence au fichier de sauvegarde de bloc (109).

3. Appareil (100) selon la revendication 1 ou 2, dans lequel
la base de données (107) comporte en outre un index de déduplication (110).

4. Appareil (100) selon l'une des revendications 1 à 3, dans lequel
les métadonnées de segment (106) pour un segment de données (105) comportent au moins un décompte de référence (401) indiquant le nombre de blocs de données dédupliqués (102) faisant référence à ce segment de données (105).

5. Appareil (100) selon l'une des revendications 1 à 4, configuré pour
écrire une pluralité de blocs de données dédupliqués (102) séquentiellement dans un fichier de sauvegarde de bloc (109), et ajouter une estampille temporelle à chaque bloc de données dédupliquées (102) écrit.

6. Appareil (100) selon l'une des revendications 1 à 5, configuré pour, dans le but de récupérer un bloc de données dédupliqué (102) à partir d'un fichier de sauvegarde de bloc (109),
utiliser uniquement le bloc de données dédupliqué (102) ayant la dernière estampille temporelle.

7. Appareil (100) selon l'une des revendications 1 à 6, configuré en outre pour
stocker, en association avec chaque fichier de sauvegarde de bloc (109) dans le référentiel (103), un fichier de bloc supprimé (300) pour stocker une référence (301) à chaque bloc de données dédupliqué supprimé (102) associé au fichier de sauvegarde de bloc (109).

8. Appareil (100) selon la revendication 7, configuré pour, dans le but de supprimer un bloc de données dédupliqué (102),
écrire la référence (301) au bloc de données dédupliqué (102) à supprimer avec une estampille temporelle dans le fichier de bloc supprimé (300) associé au fichier de sauvegarde de bloc (109) associé au bloc de données dédupliqué (102),
supprimer le bloc de données dédupliqué (102) de la base de données (107), modifier les métadonnées de segment (106) pour chaque segment de données (105) du bloc de données dédupliqué (102) dans le référentiel (103).

9. Appareil (100) selon l'une des revendications 7 à 8, configuré en outre pour, lorsqu'une taille du fichier de bloc supprimé (300) atteint une valeur de seuil déterminée,
pour chaque référence (301) à un bloc de données dédupliqué supprimé (102) dans le fichier de bloc supprimé (300), retirer toutes les copies de blocs de données dédupliqués (102) référencés dans le fichier de bloc supprimé (300) qui ont une estampille temporelle antérieure à l'estampille temporelle supprimée du fichier de sauvegarde de bloc (109), et
réinitialiser le fichier de bloc supprimé (300).

10. Appareil (100) selon l'une des revendications 7 à 9, configuré pour, dans le but de reconstruire une base de données (107),
traiter la copie la plus récente de chaque bloc de données dédupliqué (102) dans un fichier de sauvegarde de bloc (109), si le bloc de données dédupliqué (102) n'est pas référencé dans le fichier de bloc supprimé associé (300) avec une estampille temporelle plus récente que le bloc de données dédupliqué (102), dans lequel le traitement du bloc de données dédupliqué (102) comporte l'incrémentation d'un décompte de référence (401) de chaque segment de données (105) référencé par le bloc de données dédupliqué (102), et l'insertion du bloc de données dédupliqué (102) dans la base de données (107).

11. Appareil (100) selon la revendication 10, configuré en outre pour
stocker, en association avec chaque fichier de sauvegarde de bloc (109) dans le référentiel (103), un fichier de référence (302) pour stocker une liste de références (301) et une position de chaque bloc de données dédupliqué associé (102) dans le fichier de sauvegarde de bloc (109).

12. Appareil (100) selon la revendication 11, configuré en outre pour, dans le but d'accélérer la restauration d'un bloc de données reçu (101),
rechercher dans un fichier de référence (302) la position dans le fichier de sauvegarde de bloc (109) de la copie du bloc de données dédupliqué (102) associé au bloc de données reçu (101), et
restaurer le bloc de données reçu (101) à partir de la copie du bloc de données dédupliqué (102) et des segments de données (105) dans les conteneurs (104) référencés par la copie du bloc de données dédupliqué (102).

13. Appareil (100) selon la revendication 11 ou 12, configuré en outre pour, dans le but de permettre une restauration instantanée pour tous les blocs de données reçus (101) dans l'appareil (100) avant la reconstruction de la base de données (107),
rechercher dans tous les fichiers de référence (302) les positions dans les fichiers de sauvegarde de bloc (109) des copies des blocs de données dédupliqués (102) associés à tous les blocs de données reçus (101).

14. Appareil (100) selon l'une des revendications 1 à 13, configuré en outre pour sauvegarder le référentiel (103) dans un référentiel distant (500).

15. Procédé (200) de stockage de blocs de données reçus (101) sous forme de blocs de données dédupliqués (102), le procédé comprenant
le stockage (201), dans un référentiel (103), d'un ou plusieurs conteneurs (104), chaque conteneur (104) stockant un ou plusieurs segments de données (105) et des métadonnées de segment (106) pour chaque segment de données (105),
le stockage (202), dans une base de données (107), d'une pluralité de blocs de données dédupliqués (102), chaque bloc de données dédupliqué (102) contenant une pluralité de références (108) aux segments de données (105) du bloc de données reçu (101) et aux conteneurs (104) stockant ces segments de données (105),
le maintien (203), dans le référentiel (103), d'une pluralité de fichiers de sauvegarde de bloc (109), chaque fichier de sauvegarde de bloc (109) stockant une copie d'un ou de plusieurs blocs de données dédupliqués (102), et
l'association d'un bloc de données dédupliqué (102) dans la base de données (107) au fichier de sauvegarde de bloc (109) dans lequel une copie du bloc de données dédupliqué (102) est stockée.

16. Produit-programme informatique comprenant un code de programme destiné à commander un appareil selon l'une des revendications 1 à 14 ou à effectuer, lorsqu'il est exécuté sur un ordinateur, le procédé selon la revendication 15.
